(19) **Europäisches Patentamt / European Patent Office / Office européen des brevets**

(11) **EP 4 778 491 A1**

(12) **EUROPEAN PATENT APPLICATION**

(43) Date of publication:
**22.07.2026 Bulletin 2026/30**

(21) Application number: **25152881.6**

(22) Date of filing: **20.01.2025**

(51) International Patent Classification (IPC):
**A61C 5/77** *(2017.01)* **A61C 13/00** *(2006.01)*
**B33Y 50/00** *(2015.01)* **B29C 64/10** *(2017.01)*
**B29C 64/194** *(2017.01)* **B33Y 80/00** *(2015.01)*
**B22F 10/80** *(2021.01)* **B22F 10/85** *(2021.01)*

(52) Cooperative Patent Classification (CPC):
(C-Sets available)
**B33Y 50/00; A61C 5/77; A61C 13/0013;**
**B22F 10/80; B29C 64/10; B29C 64/194;**
**B33Y 80/00;** B22F 10/10; B22F 10/20;
B29C 64/386; C04B 2235/6026; G06N 20/00
(Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Fraunhofer-Gesellschaft zur Förderung der angewandten Forschung e.V. 80686 München (DE)**

(72) Inventors:
• **Simon, Andras**
**64295 Darmstadt (DE)**
• **Chen, Danwu**
**61184 Karben (DE)**
• **Urban, Philipp**
**64342 Seeheim (DE)**

(74) Representative: **Ramrath, Lukas Patentanwälte Bressel und Partner mbB Potsdamer Platz 10 10785 Berlin (DE)**

(54) **METHOD AND SYSTEM FOR DETERMINING PRINTING MATERIAL INFORMATION FOR DENTAL BIOMIMICRY AND SHADE MATCHING AND SAMPLE**

(57) A method and a system for determining printing material information (PMI) for manufacturing a layered dental structure having an outer layer (2) and at least one inner layer (3, 4), comprising the steps of:

a. receiving outer shape information and outer shade information concerning the dental structure,

b. determining inner layer-specific shape information of the at least one inner layer,

c. determining the printing material information (PMI) as a function of the outer shape information, the inner layer-specific shape information and the outer shade information

as well as a sample (7) for generating training data.

Fig.1

EP 4 778 491 A1

(52) Cooperative Patent Classification (CPC): (Cont.)

C-Sets
B22F 2999/00, B22F 10/80, B22F 2203/03,
B22F 10/85

**Description**

The invention relates to a method and a system for determining printing material information for dental biomimicry and shade matching in order to manufacture a layered dental structure as well as a sample for generating training data.

The manufacturing of dental structures, such as crowns, bridges, veneers, and dentures, is a specialized field within dental prosthetics that integrates materials science, precision engineering, and aesthetic design. The goal is to create durable, biocompatible, and natural-looking restorations that match the patient's existing teeth in shape, size, and color.

A first challenge in dental manufacturing is related to material properties as dental restorations must withstand the forces of chewing and be resistant to wear and chemical degradation. Common materials include ceramics (e.g., zirconia, porcelain), metals, and resin composites, each presenting unique manufacturing challenges. Secondly, restorations must fit perfectly onto prepared teeth or dental implants to ensure functionality and avoid complications like discomfort or bacterial infiltration.

Another problem is dental color matching as achieving a natural color match between the restoration and the patient's surrounding teeth is one of the most difficult aspects of dental manufacturing. Natural teeth are not a single uniform color. They exhibit translucency, opalescence, and varying shades of white, yellow, and gray due to their layered structure (enamel and dentin). Also, teeth color varies significantly between individuals and can be influenced by age, diet, habits, and oral health. Perception of tooth color changes under different lighting (e.g., daylight vs. dental office lighting), complicating accurate shade selection. Standardized shade guides, such as the VITA shade system, provide reference colors, but these may not capture the full range of natural tooth colors. Ceramic and composite materials used in dental structures interact with light differently than natural teeth, making it difficult to mimic the same translucency and color depth.

3D printing, also known as additive manufacturing, has also been applied to the manufacturing of artificial dental structures. It offers precision, speed, and customization, making it an ideal technology for producing dental structures. Usually using computer-aided design (CAD) software, dental technicians design the required structures (e.g., crowns, bridges, or dentures) to fit the patient's anatomy and specifications. Then, additive manufacturing builds the dental structure layer by layer using materials such as resin, metal, or ceramic composites. Possible techniques to be used include stereolithography, digital light processing, selective laser melting, direct metal laser sintering, material jetting, and fused deposition modeling.

Creating an accurate and natural appearance of dental structures through 3D printing presents several challenges. These issues stem from the complexity of replicating the optical and physical properties of natural teeth, as well as technical limitations of 3D printing technologies. A key problem is the color matching as dental structures, in particular teeth, are multi-layered and exhibit a complex interplay of translucency, opalescence, and shade variation, which is difficult to replicate accurately. Many 3D printing materials, however, are either monochromatic or have limited color options and thus, the final dental restoration may look artificial and fail to blend seamlessly with natural teeth. Further, an enamel layer is partially translucent, and dentin reflects light in a way that gives teeth their natural depth and glow. Current printers often struggle with seamlessly combining materials of different translucencies or shades in a single print.

There is the technical problem of providing a method and a system for determining printing material information for dental biomimicry and shade matching in order to manufacture a layered dental structure as well as a sample for generating training data. The method, system, and sample allow to determine printing material information for manufacturing the dental structure with a desired appearance, in particular an appearance matching in color to a reference dental structure.

The solution to said technical problem is provided by the subject-matter with the features of the independent claims. Advantageous embodiments are provided by the subject-matter with the features of the remaining sub claims.

The invention addresses the problem of determining printing material information which can be used to manufacture a dental structure, in particular a tooth, with a desired shape and appearance, in particular possessing a desired outer shade.

A method of determining printing material information for manufacturing, in particular printing, a layered dental structure having an outer layer and at least one inner layer is proposed.

The printing material information denotes information which allow to determine an amount of multiple printing materials to manufacture, i.e. print, the dental structure. In particular, the printing material information provide information based on which a printing material ratio can be determined. The set of printing materials can comprise different colored materials. It is further possible that the set of printing materials comprises a clear or translucent material.

The set of printing materials can, however, comprise only different colored materials and no clear or translucent material. In other words, the printing material information can be determined such that a desired color reproduction is achieved. Optionally, the printing material information can be determined such that a desired color and translucency reproduction is achieved.

The printing material information can represent the amount or ratio itself. Alternatively, the amount or ratio can be determined as a function of the printing material information, e.g. by using a predetermined printing material profile. In one embodiment, it is possible to determine the printing material amount or ratio to perform a halftoning algorithm based on the printing material information. Such a halftoning algorithm allows to specify printing materials for printable elements (e.g., dots, voxels, or other discrete units).

The dental structure can be a single tooth and therefore, the printing material information can be referred to as tooth-specific printing material information.

The method comprises the steps of:

a. receiving outer shape information and outer shade information concerning the dental structure (receiving step),
b. determining inner layer-specific information of the at least one inner layer (layer determination step),
c. determining the printing material information as a function of the outer shape information, the inner layer-specific information and the outer shade information (material determination step).

The layered dental structure comprises an outer layer and at least one, preferably more than one, inner layer. The outer layer can model an enamel layer. A first inner layer can model a dentin layer. A second inner layer can model a root layer. Layers arranged in between the outer layer and the most inner layer can also be referred to as intermediate layers. The outer layer and intermediate layers can enclose a (further) inner layer. In the context of this invention, a layer denotes a three-dimensional structure. Each layer can have an outer surface. All layers can also have an inner surface, wherein the most inner layer does not necessarily have an inner surface. Preferably, the dental structure can have an outer layer modeling an enamel layer, a first inner layer modeling a dentin layer and a second inner layer modeling a root layer. Further, the dental structure can comprise a gingiva portion modeling the gingiva or sections thereof.

The outer shape information represents a three-dimensional outer shape of the dental structure, in particular an outer surface of the outer layer. The outer shape information can be provided as a vertex-based representation of the shape, in particular as a point cloud in a 3D space. The shape information can also be determined as a mesh, e.g. with faces connecting points of the point cloud. The outer shape information can also be provided as shape model, in particular a parametrized model. The outer shape information can be generated using a geometry measurement, e.g. with a corresponding scanning device such as an intraoral scanner.

The inner layer-specific information can be or can comprise inner layer-specific shape information. Similar to the outer shape information, such inner layer-specific shape information can represent a three-dimensional shape of an inner layer, in particular an outer surface of the inner layer. The inner layer-specific information can also comprise thickness information, in particular layer-specific thickness information, and/or translucency information, in particular layer-specific translucency information.

Providing translucency information as part of the inner layer-specific information advantageously allows to determine a translucency part in the printing material information with a high accuracy, in particular a translucency part in a layer-specific printing material information. Such a translucency part can represent an amount of translucent or clear printing material. If the printing material information are determined such that a desired color reproduction is achieved, a desired translucency can be selected by a user and/or automatically.

The outer shade information can be color information. The color information can be provided according to a predetermined color space such as a CIELAB, a sRGB model or a AdobeRGB color space. In one embodiment, the outer shade information can also comprise translucency information of the whole dental structure to be manufactured, i.e. the overall translucency.

The outer shade information can be assigned to different spots or sections represented by the outer shape information. In other words, the shape represented by the outer shape information can be annotated with the outer shade information. Preferably, the outer shade information represents spot- or section-specific shade information of at least one spot or section on the outer surface of the outer layer, in particular on a labial or buccal surface of the dental structure. Preferably, the spot or section is located in the middle third of the outer surface along an occlusal or incisal direction which is oriented from the base to the chewing surface or cutting edge.

The outer shape information and the outer shade information can be provided as a common or as separate data signal(s). These pieces of information can be determined based on a user input. It is e.g. possible that a user such as a dental professional specifies the outer shape and the outer shade. For this, corresponding inputs signals can be generated by a user interface such as a graphical user interface upon interaction with the user. Outer shape information can be generated in a computer-aided manner, e.g. by using a CAD software.

Outer shade information can be generated by using shade guides. Such shade guides can denote tools used to determine and match the color of a patient's natural teeth to ensure that the dental structure resemble existing dental structures such as the surrounding teeth in color and appearance. These guides provide a systematic way to communicate color information between dental professionals and dental laboratories. Shade guides can consist of a series of pre-made dental structures, e.g. tooth-shaped tabs or chips, each representing a specific tooth color or shade. Each structure can be labeled with a unique code encoding the respective shade information. To determine the outer shade information, a shade guide structure can be selected, e.g. by a user, wherein the respective shade information provides the outer shade information.

Outer shade information can also be generated by using a color measurement. Such measurements can be performed by using a spectrophotometer, in particular under the assumption of predetermined viewing conditions for graphic technology and photography which are e.g. defined in applicable standards such as ISO 3664:2009 "Graphic technology and photography - viewing conditions". Viewing conditions can comprise conditions on the illumination, e.g. a CIE D65 illumination, and/or the observer, e.g. a 2° observer. The illumination condition can be provided by or comprise the spectral power distribution of the illumination such as defined by the CIE D65 illuminant which is e.g. defined in the standard above. To determine the outer shade information, an existing dental structure, e.g. a neighboring tooth, can be measured, wherein the outer shade information is determined as a function of the measured color.

In the layer determination step, geometric information of the at least one inner layer, in particular of an outer surface of said layer and, if applicable, of an inner surface of said layer is determined. The information can represent a spatial course of the surface(s). Said shape information can be determined in a reference coordinate system. This reference coordinate system can be a reference coordinate system of the outer shape information. If the reference coordinate system is different from the reference coordinate system of the outer shape information, the outer shape information can be transformed into the reference coordinate system.

In the material determination step, the printing material information as explained above is determined.

In a first alternative, the printing material information and/or the printing material amount/ratio can be determined in a printer-independent manner, in particular as a printer-independent color value vector. Such a printer-independent color value vector can be defined in a printing device-independent color space. Said space can preferably be the CIELAB color space or a RGB color space, such as sRGB or Adobe RGB, which is well known to the skilled person. In the first case, the printer-independent color vector can comprise an L*-entry representing the perceptual lightness (L*) and two entries, namely an a*-entry and a b*-entry, representing the four unique colors of human vision red, green, blue and yellow. It is also possible that an entry representing translucency is added to the color value vector. In this case, the printing material information and/or the printing material amount/ratio can be determined by a color and translucency value vector. The translucency entry can be represented by the Alpha-value as defined in "Urban, P., Tanksale, T. M., Brunton, A., Vu, B. M., & Nakauchi, S. (2019). Redefining a in rgba: Towards a standard for graphical 3d printing. ACM Transactions on Graphics (TOG), 38(3), 1-14.", which is electronically available at https://doi.org/10.1145/3319910. It is, of course, possible to use other embodiments of the printer-independent color value vector. The printer-independent color space can be an n-dimensional space.

Translucency information can be represented/defined by or be determined as function of the Alpha-value as outlined above, wherein an inner layer-specific translucency information denotes the translucency information of the corresponding inner layer.

In a second alternative, printing material information and/or the printing material amount/ratio can in particular be determined in a printer-specific manner. It can be determined as tonal vector which comprises at least one, preferably multiple, entry/entries, wherein an entry of the vector represents the amount of a specific printing material used by the printing device. A tonal vector can also comprise entries with values that are to be transformed, e.g. by a function, to the amount(s) of one or multiple printing material(s). As an example, the tonal vector can be a CMYKW vector, wherein C is the tonal value for cyan printing material, M is the tonal value for magenta printing material, Y is the tonal value for yellow printing material and K is the tonal value for black printing material. As a further example, the tonal vector can comprise the CMYK tonal values and at least one further value, e.g. a tonal value for a transparent printing material and/or a further tonal value for white printing material and/or a further tonal value for a support material, e.g. $\gamma$ value of a CMYK$\gamma$ vector, where $\gamma$ represents the ratio between white and transparent printing materials within the unit volume not occupied by CMYK materials.

It is possible to determine printer-specific printing material information as a function of printer-independent material information. Corresponding algorithms are known to the skilled person. One exemplary algorithm is disclosed in in the document "A. Brunton, C. A. Arikan, T. M. Tanksale, and P. Urban, "3d printing spatially varying color and translucency," ACM Transactions on Graph. (TOG) 37, 157:1-157:13 (2018)" and the separate and supplemental appendix C to said document which is electronically available at https://dl.acm.org/doi/10.1145/3197517.3201349 as supplemental material.

The printing material information can be provided as a data signal which can then be used to determine control signals for controlling the manufacturing process.

In the material determination step, the outer shape information, the inner layer-specific information, in particular inner layer-specific shape information, and the outer shade information can provide input variables, wherein the printing material information provides an output variable. It is possible, that at least one layer thickness is determined as a function of the outer shape information and the inner layer-specific information, wherein the printing material information is determined as a function of the at least one layer thickness information and the outer shade information. It is further possible that an inner layer-specific translucency information provides an input variable.

The printing material information can be determined for each element of a set of different dental structure elements, wherein a dental structure element denotes a point of partial volume of the dental structure to be manufactured.

An element can in particular denote a printable element such as a voxel in a voxel-based representation of the dental structure to be manufactured. Preferably, the printing material information is a layer-specific printing material information. In this case, it is possible that one signal printing material information is assigned to a selected layer. This results in a homogenous layer. As of this, the printable elements of this layer can all be printed with the same printing material combination. It is, however, also conceivable that varying printing material information are assigned to varying elements of the set of different dental structure or layer elements.

The printing material information can be determined with a spatial reference to the dental structure to be printed, in particular with a reference to the shape information, in particular the layer shape information. If the printing material information are determined as layer-specific information, an information regarding the spatial position of such a layer can also be provided. This advantageously allows to determine control signals for printing the dental structure, in particular for printing the defined printing material combination at a selected position of the dental structure. In other words, it is possible to determine shape information of a dental structure to be manufactured as well as printing material information for said structure, i.e. shape information with annotated printing material information. This information allows to manufacture the dental structure, e.g. with a manufacturing device such as a 3D printer.

The proposed method advantageously allows to determine printing material information for manufacturing a dental structure with a desired appearance, in particular an appearance matching in color to a reference dental structure. i.e. possessing a desired outer shade.

In a further embodiment, the printing material information is a layer-specific printing material information. This has been explained before and advantageously allows a computationally fast determination of the printing material information and to manufacture the dental structure in a simple manner since only one printing material combination is used per layer.

In a further embodiment, a layer thickness is determined as a function of the outer shape information and the inner layer-specific information, in particular the inner layer-specific shape information, wherein the printing material information is determined as a function of at least the layer thickness and the outer shade information. This has also been explained before.

If the inner layer-specific information comprises translucency information, in particular information on a layer-specific translucency, the printing material information can be determined as a function of the layer thickness, said translucency information and the outer shade information. In other words, the printing material information can be determined as a function of the layer thickness, translucency information, in particular layer-specific translucency information, and the outer shade information.

The layer thickness can e.g. be determined along a reference direction. The reference direction can in particular be a direction oriented orthogonal to the facial surface of the dental structure and oriented form said facial surface to the lingual surface. The layer thickness can also be a spot-specific thickness which is determined along the reference direction which intersects the respective spot on the surface of the dental structure to be manufactured. The layer thickness can be determined for each layer, wherein the resulting set of layer thicknesses then provides an input variable for the material determination step.

This advantageously allows a computationally effective and fast determination of the printing material information.

In a further embodiment, outer shade information comprise spot-specific shade information of at least two spots on an outer surface of the dental structure. As outlined before, both spots can be located on the outer surface of the outer layer, in particular on a labial or buccal or facial surface of the dental structure. Preferably, exactly one or at least one spot of the set of spots is located in the middle third of the outer surface along an occlusal or incisal direction which was specified before. This advantageously allows a computationally effective and fast determination of the printing material information which then allow to manufacture the dental structure with the desired appearance.

In a further embodiment, the inner layer-specific information, in particular the inner layer-specific shape information, is determined based on a parametrized shape model. The parametrized model can e.g. represent or encode points on a surface of the respective inner layer, preferably the outer surface. The points can be determined in a reference coordinate system.

Preferably, parameters of a shape model for an inner layer, e.g. the dentin layer or the root layer, are determined as a function of at least one of the outer shape information, predetermined shape information of the outer layer and predetermined shape information of at least one further inner layer.

This predetermined layer shape information can be provided by a predetermined shape library which allows to determine (outer an inner) layer shape information for a dental structure, in particular with a desired outer shape. Such a library can be provided by a dental company that has a lot of experience in aesthetics. One example is a dental library LIB of outer tooth shapes which is used by the DentalCAD software and which allows to create special designs of dentin and root outer shapes for each tooth shape ensuring a high aesthetic of the tooth with the corresponding inner structure.

It can be assumed that geometric designs of enamel, dentin and root outer surfaces are respectively predetermined for different types of dental structures such as a tooth, e.g. a front tooth such as a central incisor. The invention, however, does not require dentin and root outer surfaces to be especially designed for an outer tooth shape as it is also possible to use inner shapes designed for or adapted to an outer tooth shape of a particular tooth and assign them to a different tooth.

This independence of inner shapes from the outer shape is also important because an outer shape of a dental structure can also be altered to ensure a better fitting for the patient. In this case the inner shapes especially designed for the outer tooth shape might not fit well to the modified tooth and would need adaptation.

In a preferred embodiment, the shape model is a star shape model. A star shape model is characterized by the fact that all points defined by the star shape model can be connected to a reference point with a straight line, wherein all points of the line are also points defined by the star shape model. As of this, a point of a surface of a layer (surface point) can be defined by spherical coordinates with respect to the reference point, the spherical coordinates defining a distance between the surface point and the reference point and the two angles defining the orientation of the line connecting the surface point and the reference point (connecting line). Parameters of such a star shape model are the coordinates of the reference point and information with respect to a reference coordinate system in respect to which the angels defining the orientation of the connecting line are defined.

To describe a shape, in particular a surface of a layer, a domain of the two angles $(phi, theta) \in [0,360°) \times [0,180°]$ of the spherical coordinates can be discretized, e.g. the first angle (phi) domain by N equidistant angles and the second angle (theta) domain by M equidistant angles. The shape can then be characterized by an NxM-dimensional matrix in which every entry corresponds an angle pair and contains the distance from the reference point. This matrix can then be referred to as shape descriptor. The inner structure of a dental structure which contains enamel, dentin and root, can be described by 3 shape descriptors all defined by the same center reference point.

The parametrized shape model can then be used to quickly and accurately determine layer-specific shape information and, if required, layer-specific thickness information which advantageously allows to determine the printing material information quickly and accurately. In one possible solution, the reference point can be a predetermined point or it can be determined such that a distance measure between the shape defined by the reference point-specific star shape model and a set shape, e.g. provided by a shape library, is minimized. The distance measure can e.g. be a so-called Hausdorff distance or an approximated Hausdorff distance. It is, however, possible to use other approaches to determine the reference point.

In case of a set shape being a star-shape and the chosen center point being a star-shape center, the shape could be reconstructed by using the parametrized star shape model in a way that the set shape and the model-based shape is identical, in particular when using a continuous reconstruction. Using a discrete approximation of the star shape model, however, results in a shape deviation between the set shape and the model-based shape. If, however a resolution of the discrete approximation is large enough and the chosen reference point would give a zero distance in case of a continuous reconstruction, the distance between neighboring vertices in the discrete approximation is small.

Using this observation the objective of the reference point search can be modified to minimize the distance between reconstructed neighboring surface vertices.

Using this objective function with a grid search, a good approximating reference point can be found for star shaped objects and non-star shaped objects.

In a further embodiment, the inner layer-specific information, in particular the inner layer-specific shape information, is determined as a function of outer layer-specific shape information and a functional value of a morphing function. The functional value can be determined based on at least one of predetermined shape information of the outer layer and predetermined shape information of at least one (further) inner layer. In particular, the functional value can represent a distance between the outer surface of the dental structure and the outer surface of the respective inner layer. This distance can be a distance along a reference direction. In particular, the reference direction can be oriented orthogonal to the surface in a surface point for which the distance is to be calculated. Alternatively, the distance can be a distance along the line connecting a selected surface point and the reference point as explained above.

In a further embodiment the morphing function is an isotropic or anisotropic morphing function. An isotropic morphing function has constant characteristics along the outer layer or for all points for which the distance is to be calculated, wherein an anisotropic morphing function can have varying characteristics along the outer layer or for all points for which the distance is to be calculated.

This allows a computationally effective, fast and accurate determination of the inner layer-specific, in particular shape, information which, in turn, results in an accurate determination of the printing material information.

In a further embodiment the printing material information are determined using a backward model which describes the relationship between a model input and a model output, wherein the model input is provided by or depends on the at least the outer shape information, the inner layer-specific information, in particular the inner-layer specific shape information, and the outer shade information. It is further possible that the model input vector comprises information on a predetermined layer-specific translucency, in particular for all or for selected, but not all, layers.

Also, the aforementioned layer thickness of the at least two layers can be determined as a function of the outer shape information and the inner layer-specific information, in particular the inner-layer specific shape information, wherein the layer thickness and the outer shade information then provide the model input.

The model output is provided at least by the printing material information, in particular by layer-specific printing material information for all layers or for selected, but not all, layers.

In particular in the case that the dental structure comprises an enamel layer (outer layer), a dentin layer (second layer) and a root layer (third and most inner layer), it is possible to set the layer-specific translucency of the root layer as the layer-specific translucency of the dentin layer. In this case, it is also possible that the model output of the backward model only comprises layer-specific printing material information for the enamel and the dentin layer but not for the root layer. The printing material information for the root layer can be determined as a function of the printing material information for the dentin layer, e.g. using a model which represents a dentin-to-root color relationship.

Preferably, the model input is a vector which comprises elements representing outer shade information, in particular at one or at multiple spots or sections, and the corresponding layer thicknesses at these spots or sections, wherein the model output is a vector comprising the layer-specific printing material information. It is further possible that the model input vector comprises a predetermined layer-specific translucency.

In a general manner, a model can describe a relation between the model input and the model output and can be provided as a predetermined assignment, e.g. provided by a look up table, as a functional relationship or as any other kind of model which establishes a correlation between input values and output value. Preferably, the backward model is a machine learning model which will be explained later. Using the backward model advantageously allows a fast but accurate determination of the printing material information. Generally, determining a model output based on a given or selected model input can be referred to as prediction.

In a further embodiment the backward model is determined based on a forward model which describes the relationship between a model input and a model output, wherein the forward model input is provided by or depends on at least the printing material information, in particular the layer-specific printing material information, wherein the forward model output is provided by or comprises an outer spectral reflectance information. In other words, the backward model can be an inverse of the forward model. Further, the forward model input can comprise inner layer-specific information, in particular the inner-layer specific shape information but optionally also translucency information, in particular layer-specific translucency information. Again, layer-specific information can be provided for all layers or for selected, but not all, layers.

Preferably, a model input of the forward model is an input vector which comprises layer-specific printing material information and the respective layer thickness, in particular for all layers or for selected, but not all, layers. Also, the model output can be a discretized spectral reflectance function predicting a color measurement. The spectral reflectance function can be divided into K parts, in particular equidistant part, and can relate to a predetermined wavelength range. Just as an example, K can be set to 31 and/or the wavelength range can be selected as visible wavelength range comprising wavelengths from 400$nm$ to 700$nm.$ As a result, it is possible to predict a spot- or section-specific reflectance information.

In particular in the case that the dental structure comprises an enamel layer (outer layer), a dentin layer (second layer) and a root layer (third and most inner layer), the root layer-specific printing material information can be determined as a function of the dentin layer-specific printing information using a further and in particular simpler model. The root layer-specific thickness is also not required, since the total thickness of the three layers of the dental structure is constant.

Establishing a forward model based on which the backward model is determined advantageously allows to determine an accurate backward model which, as an effect, increases the accuracy of determining the printing material information. It is in particular not required to provide a large set of measured model input elements and corresponding measured model output of the backward model in order to determine or establish the backward model as such input and output elements can also be generated by using the forward model.

In a preferred embodiment, the backward model and/or the forward model are machine learning models. A machine learning model can denote a model which is built by machine learning. Such a machine-learned model (MLM) can be a model generated by a supervised learning method. Such MLMs are also referred to below as supervised MLMs. In particular, it can be a neural network, in particular a DL model such as a CNN (convolutional neural network), an RNN (recurrent neural network), an LSTM network (long short-term memory network) or a model of the transformer family (transformer model). However, it is also conceivable that an MLM is generated by a method for unsupervised learning, for semi-supervised learning or for self-supervised learning. Such MLMs are also referred to below as unsupervised MLMs. In particular, the be a GAN (generative adversial network) or a VAE (variational autoencoder).

Such a MLM can be built by training, wherein training is performed based on training data, wherein the training data comprises a set of input data (elements) and a set of corresponding output data (elements). During training, one or more model parameters, e.g. weights and/or connections of a neural network, are varied in order to minimize the difference between the elements of the training output data set and the output data elements provided by the model based on the elements of the training input data set, i.e. the predicted model output elements. Training can e.g. be performed using a loss function (or cost function) which comprises a term representing the aforementioned difference (difference-related term). Model parameters are determined in order to minimize the loss function. Algorithms for training are well-known to the skilled person.

Preferably, the backward model is parametrized as a neural network that consists of multiple hidden layers, with the input layer to accept the aforementioned model input (overall colors, layer thicknesses, and layer translucencies), and output layer to output the aforementioned model output.

In case of the backward model, the training input data set can comprise elements which represent different combinations of outer shape information, inner layer-specific information, in particular the inner-layer specific shape information, and outer shade information, wherein the training output data set can comprise elements representing the corresponding printing material information. More particular, the training input data set can comprise vectors which comprise elements representing different outer shade information, in particular at one or at multiple spots or sections, and layer thicknesses at these spots or sections and, if applicable a layer-specific translucency, wherein the training output data set comprises elements with the corresponding layer-specific printing material information.

In case of the forward model, the training input data set can comprise elements which represent different combinations of shape information and printing material information, wherein the training output data set can comprise elements with the corresponding outer reflectance information or elements with color information determined as a function of the reflectance information, e.g. by using an observer model such as a CIE 2° standard observer and an illuminant such as a CIE D65 illuminant. More particular, the training input data set can comprise vectors which comprise elements with different layer-specific printing material information and the respective layer thickness, wherein the training output data set comprises elements being a value or vector representing the outer reflectance information, in particular a spot- or section-specific reflectance information.

Using a MLM as backward and/or forward model advantageously allows a fast and accurate determination of the printing material information.

In a further embodiment, the backward model is trained using a cost function with a color loss term and/or with a trust region loss term.

The color loss term can represent a color difference CD between a first term T1 and a second term T2, e.g. as CL = CD(T1, T2). The first term T1 represents or depends on the outer shade information represented by elements of the training input data set. The second term T2 represents or depends on a model output of the forward model, i.e. a prediction. Said model output of the forward model is predicted by the forward model based on a model input being provided by the model output of the backward model, i.e. a backward model prediction, wherein said model output of the backward model is predicted by the backward model based on the model input comprising the outer shade information which the first term represents or which is based thereon. The color difference can be determined according to a predetermined color difference measure which can e.g. be the CIEDE2000 color difference.

Preferably, the color loss term is a function of spot-specific color differences, e.g. a sum, of color differences at multiple spots. These multiple color difference can be weighted with varying weights. In this case, the color loss term can be determined as a weighted sum of spot-specific color differences. It is possible that weights are selected based on the different importances of these spots' color reproduction accuracy, depending on a specific application scenario. E.g. when their color accuracies are equally important, an uniform weight distribution should be set. However, this is typically not the case in practice, because some spots have higher influence on visual fidelity or pleasure than other spots, e.g. the middle part of a tooth has higher visual influence than its incisal part and the near-gingiva part, therefore, in this case the spots in the middle part should be assigned higher weights compared to spots in other areas.

The trust region loss can represent a difference between the model output of the backward model, i.e. a prediction, and the most similar or nearest element of the input training data set for training the forward model, said element representing printing material information. As an example, a printing material difference can be determined between the model output of the backward model and all elements of the input training data set which represent a printing material information. Then, the trust region loss can be determined as a function of the smallest difference. The printing material difference can be determined according to a predetermined measure. Such a measure can be an Euclidean distance, in particular if the printing material information is provided as a color value vector, e.g. a RGB or CIELAB vector. The Euclidean distance can be determined in a space with the number of elements in a model output element of the backward model. If the backward model e.g. predicts a three-dimensional RGB vector for each layer of a number n of layers, the Euclidean distance is determined in an nx3-dimensional space.

It is also possible to set a trust region radius to a predetermined value, i.e. a radius, within which range of a predicted model output of the backward model is considered close enough to an element of the forward model training input data set. If the model output is arranged within said range, the trust region loss can be set to zero. This can be done via e.g. subtracting the aforementioned distance by the radius and only penalize positive values.

As a result, the backward model is determined such that it tends to be more accurate in the neighborhood of elements of the training input data set, i.e. training input samples, than outside this neighborhood. This is in particular of advantage if, due to the data distribution bias of training data set of the forward model, said forward model, as an approximation function of the forward process, tends to have higher accuracy or trustability in the neighborhoods of its training samples than in distant areas. In other words, the trust region loss encourages the backward model to search for solutions in trust regions of the forward model.

The final loss function can be a weighted summation of the color loss term and the trust region loss term. The weights can be selected based on relative importances of difference terms. E.g., for two spots, one could set weights for the spot in the aforementioned middle part and the other spot in e.g. a near-gingiva part to be 1.0 and 0.5 respectively, and the weight for the trust region loss to be 0.1.

As an overall result, the proposed cost function terms allow an accurate determination of the backward model which, in turn, allows an accurate determination of the printing material information.

In a further embodiment, the forward model is determined based on at least one training data set, wherein a first forward model instance is determined based on a first training data set which comprises a training input data set and training output data set and is provided by

a. specifying a plurality of elements of the training input data set, each element representing a layer thickness information and a layer-specific printing material information,
b. manufacturing a sample according to each element of the training input data set,
c. measuring a spectral reflectance of each sample, wherein the measured spectral reflectances providing elements of the training output data set.

Specifying the plurality of elements of the training input data set, i.e. a plurality of training samples, can be performed according to a predetermined sampling strategy. This sampling strategy can be based on a predetermined probability distribution.

The number of training samples can be selected from the range of hundreds to thousands, other numbers, however, are also possible. In one example, samples can be selected such that they are uniformly distributed in a predetermined model input space or subspace of said model input space. If the model input comprises a layer-specific thickness information for a plurality of layers, training samples can be selected such that the layer-specific thicknesses are uniformly distributed in a predetermined layer-specific thickness range. If the model input comprises a layer-specific translucency information for a plurality of layers, training samples can be selected such that the layer-specific translucencies are normally distributed in a predetermined layer-specific translucency range. It is, however, conceivable that also other distributions can be used.

Manufacturing of the sample can be performed by a printing device, in particular a 3D printing device. This printing device can be the printing device which is also used to manufacture the dental structure to be manufactured, i.e. the target. The sample is manufactured according to the model input parameters, in particular with the element-specific layer thicknesses and the element-specific printing material information, eventually including layer specific printing material information. Exemplary samples will be described in the following.

Measuring the spectral reflectance can be performed with a color measurement device as described above with respect to the generation of outer shade information. In particular, a spectrophotometer can be used to measure the spectral reflectance of the manufactured sample. The spectral reflectance can be measured at a predetermined spot or section of the sample.

The proposed determination of the forward model advantageously allows to provide an accurate forward model in a simple manner which can then be used to determine an accurate backward model and thus to provide an accurate determination of the printing material information.

If the shape of the samples differs from a tooth shape by e.g. more than predetermined amount, the forward model prediction can be corrected such that the shape difference is considered. It is e.g. possible to determine a compensation model, e.g. by machine learning which takes as input

- a layer thickness information and a layer-specific printing material information of the sample
- information with respect to the outer shape and/or the shape of inner layers of a target tooth shape,
- information with respect to the outer shape and/or the shape of inner layers of a the sample (optional),
- a prediction by the forward model (reflectance).

and provides as an output a corrected reflectance, i.e. a corrected prediction of the forward model. The corrected forward model prediction can then be determined as the output of the compensation model. This compensation model can be determined by an adequate training. It advantageously provides more accurate predictions of the forward model which can then be used to determine a more accurate backward model and thus to provide an accurate determination of the printing material information. Using combination of a forward model and a compensation model also allows to build a good foundation model (by the forward model) that has acceptable accuracy for different tooth shapes (e.g. front tooth, back tooth, tooth from different people groups, different tooth shape designs), and then allows to correct/custom a compensation model for a specific tooth shape for a further higher accuracy. The training effort of the forward model remains the same, but the training of the compensation model can be with less data (compared to the data amount for the forward model) due to the sample's resulting color proximity to a target tooth.

In a further embodiment, at least one further training data set for determining a further instance of the forward model is generated by using a previous forward model instance, said previous forward model instance being a forward model determined based on a previous training data set. As one example, a second instance of the forward model can be determined based on the aforementioned first forward model instance as outlined before.

The previous forward model instance is used to determine, i.e. predict, a spectral reflectance for each element of a set of further elements representing at least layer thickness information and a layer-specific printing material information. While the plurality of training data samples for training the first forward model instance can be denoted as initial training data samples, these further elements can be denoted as further training data samples. An element, i.e. a further training data sample, and the element-specific reflectance, i.e. the element-specific prediction, are only considered as elements of the further training data set if a reflectance-specific criterion is fulfilled. Then, the further instance of the forward model is determined based on the further training data set. In this context, the further training data set can include or exclude the elements of the previous training data set.

To put it figuratively, the first forward model instance will have a general understanding of the color space in the region where the dental colors are located. Beside the dental colors in this initial region, it can also contain areas where non-dental colors are located. Providing the further training data set with elements of a non-dental color region will not necessarily increase the accuracy of the second forward model instance.

Using the reflectance-specific criterion therefore allows to consider only those elements in a further training data set which allow to increase the accuracy of the next forward model instance.

The reflectance-specific criterion can e.g. be fulfilled if the prediction of the reflectance provided by the previous forward model instance corresponds to at least one element of a predetermined set of reflectances or does not deviate more than a predetermined amount from such an element. The elements of the predetermined set of reflectances can be determine based on a predetermined set of color values, in particular in a given color space. It is also possible that reflectance-specific criterion can e.g. be fulfilled if the prediction of the reflectance provided by the previous forward model instance is located in a predetermined part of a reflectance space (which can be determined based on a predetermined part of a color space). The predetermined part of the color space or the predetermined set of color values can be determined such that predetermined target dental colors are represented. In another embodiment, the part of the color space or the predetermined set of color values can be determined such that predetermined target dental colors and colors within a predetermined color margin are represented. The predetermined part of the color space is the convex hull of predetermined target dental colors.

In other words, a set of further elements can be specified, e.g. according to a predetermined sampling strategy, and a prediction can be performed using the previous forward model instance. Then, a filter can be applied to select only those elements of the set of further elements for which the reflectance-specific criterion is fulfilled.

Alternatively or in addition, the determination of the further training data set comprises specifying a plurality of model input elements for the backward model. Each of these elements represents at least an outer shade information and a layer thickness information. The determination further comprises predicting corresponding model output elements with the backward model. Then, the layer-specific printing material information of the predicted model output elements and the layer-specific thickness information are used to manufacture a sample. Further, a spectral reflectance of each sample is measured. Then, the layer-specific printing material information of the predicted model output elements and the layer-specific thickness information provide elements of the training input data set of the further training data set and the measured reflectances provide elements of the training output data set of the further training data set.

It is possible to determine multiple instances of the forward model successively, wherein the last instance is then used as forward model.

In summary, the proposed determination of the further training data set advantageously allows increasing the accuracy of the forward model.

In a further embodiment, the backward model is determined based on at least one training data set comprising a training input data set and a training output data set, wherein at least one element of the training output data set is provided by printing material information, in particular layer-specific printing material information, wherein a corresponding element of the training input data set is provided by or depends on the model output of the forward model if said printing material information provides a model input for the forward model or a part thereof. In addition, the model input for the forward model can also comprise, in particular layer-specific, thickness information and/or, in particular layer-specific, translucency information. In other words, the element of the training input data set is provided or depends on the prediction of the forward model for the given printing material information and, if applicable, layer-specific thickness information.

Preferably, the training output data set for training the backward model comprises elements of the training input data set of the first and/or at least one further training data set being used for determining the forward model, wherein the corresponding elements of the training input data set comprises the prediction of the forward model based on these elements.

More preferably, the training output data set for training the backward model can also comprise varied elements of the training input data set of the first and/or at least one further training data set. Varied elements can be determined as a function of unvaried elements, e.g. by varying the printing material information and, if applicable, layer-specific thickness and/or translucency information. The corresponding elements of the training input data set can then be determined as a prediction of the forward model based on these varied elements. A variation can e.g. performing by adding a predetermined offset value, in particular on the printing material information and/or the layer-specific thickness. In this scenario, the backward model is not only trained using measured samples but also on samples in their neighborhood.

In summary, the proposed determination of the backward model advantageously allows increasing the accuracy of the backward model.

The overall advantage of the proposed method is that a dental structure with visually-realistic layer structure with translucency can be manufactures. The translucency level is customizable based on one's application scenarios. The method can be extended to reproduce colors accurately on multiple spots instead of only one. This allows to create desired color gradients within the tooth. Further, multiple rounds of updating the aforementioned forward and backward model increases simplicity and effectiveness, in particular by avoiding searching irrelevant areas, e.g. non-dental colors, thus reducing printing and measuring efforts or increasing accuracy for color areas of one's interest e.g. dental colors. The resulting dental structure can be used as a starting point and adapted to reproduce the appearance of adjacent teeth for partial dentures, bridges or crowns.

The inner structure parametrization allows to generate naturally looking teeth by inserting aesthetic inner structures into arbitrary outer tooth shapes.

The layered slab/sample design (which is explained later) provides a simplicity reduction for measuring and the models based on the teeth-geometry-agnostic flat slab can be applied to different teeth geometries. Tooth-like samples (which are also explained later) can be also used to build a compensation model that further corrects the forward model, or to directly replace layered slabs for building the forward model when seeking very high accuracy for a specific tooth geometry at a cost of lower generalization capacity (compared to layer slabs) on other tooth geometries.

The proposed forward model provides a tool to evaluate the prediction quality of the backward model predictions and to guide the backward model to find solutions with good forward model predictions.

The backward model trained with data generated by the forward model and/or with the proposed cost function advantageously allows to reliably identify printing material information

- out of a set of multiple possible printing material information which all provide the desired colors on multiple spots and/or
- even if there was no sample manufactured that possesses the desired colors in the training data set for the forward model.

Further described is a method for manufacturing a dental structure, in particular for a patient, comprising the steps of:

- determining printing material information according to one of the embodiments described in this disclosure,
- manufacturing the dental structure according to printing material information.

The manufacturing can be performed by 3D printing, wherein the printing material information and also shape information, in particular layer shape information, are used to generate control data for a 3D printing device and the 3D printing device is operated with the control data. Further described is a dental structure which is manufacture by a method for manufacturing a dental structure according to one of the embodiments described in this disclosure.

Further described is a program which, when running on a computer, in particular the proposed computer device or system, or in any other suitable automation system, causes the computer or the (automation) system to perform one or more or all steps (see above) of the method of determining printing material information for a dental structure according to one of the embodiments described in this disclosure and/or to a program storage medium on which the program is stored (in particular in a non-transitory form) and/or to a computer comprising said program storage medium and/or to a (physical, for example electrical, for example technically generated) signal wave, for example a digital signal wave, carrying information which represents the program, for example the aforementioned program, which for example comprises code means which are adapted to perform any or all of the method steps described herein.

This means that the method or parts of the method in accordance with the invention is for example a computer implemented method. For example, all the steps or merely some of the steps (i.e. less than the total number of steps, see above) of the method in accordance with the invention can be executed by a computer, in particular by the disclosed computer device or system. An embodiment of the computer implemented method is a use of the computer for performing a data processing method. The computer for example comprises at least one microcontroller or processor or integrated circuit and for example at least one memory in order to (technically) process the data, for example electronically and/or optically. The processor being for example made of a substance or composition which is a semiconductor, for example at least partly n- and/or p-doped semiconductor, for example at least one of II-, III-, IV-, V-, VI-semiconductor material, for example (doped) silicon and/or gallium arsenide. The calculating steps described are for example performed by a computer. Determining steps or calculating steps are for example steps of determining data within the framework of the technical method, for example within the framework of a program. A computer is for example any kind of data processing device, for example electronic data processing device. A computer can be a device which is generally thought of as such, for example desktop PCs, notebooks, netbooks, etc., but can also be any programmable apparatus, such as for example a mobile phone or an embedded processor. A computer can for example comprise a system (network) of "sub-computers", wherein each sub-computer represents a computer in its own right.

The computer program product advantageously allows to perform a method of determining printing material information according to one of the embodiments described in this disclosure for which technical advantages have been outlined before. Also described is a computer program product with a computer program, wherein the computer program comprises software means for the execution of one, multiple or all steps (see above) of the method for manufacturing an dental structures for a patient according to one of the embodiments described in this disclosure if the computer program is executed by or in a computer or an automation system.

Further proposed is a system for determining printing material information for manufacturing a layered dental structure having an outer layer and at least one inner layer, the system comprising at least one interface for receiving outer shape information and outer shade information concerning the dental structure and at least one evaluation unit, wherein the system is configured to perform a method according to one of the embodiments described in this disclosure. The system can also comprise

- an interface for transmitting the printing material information,
- a device for performing color measurements,
- a memory for storing information in a retrievable manner, in particular information on the backward and/or forward model,
- a printing device for printing the aforementioned samples.

The proposed system advantageously allows to determine printing material information for manufacturing a dental structure with a desired appearance, in particular an appearance matching in color to a reference dental structure.

Further described is a system for manufacturing a dental structure, comprising a system according to one of the embodiments described in this disclosure and means for manufacturing the dental structure according to the printing material information. The means for manufacturing can comprise or be provided by a 3D printing system which comprises a 3D printing device and at least one control unit, wherein the control unit is configured to generate a control signal for the 3D printing device based on the printing material information and, if applicable, the shape information.

Further proposed is a sample for generating training data used to determine a forward model according to one of the embodiments described in this disclosure, wherein the sample comprises a structure with at least two layers of printing material and at least one layer of clear printing material surrounding the structure at least partially. The clear material can surround the side surfaces of the structure. In other words, the layer of clear material can be provided as a hollow frame, wherein the stack is arranged in the hollow space of the frame. The layers of printing material model or mimic layers of a dental structure, e.g. an enamel layer, a dentin layer and a root layer. The clear material mimics the illuminating conditions of teeth as light can enter also from the side into the sample, in particular into the structure.

The sample can comprise a stack with at least two layers, in particular flat layers, which are arranged one above the other from bottom to top.

The sample can have a box shape or a cylinder shape. The printing material layers can also have a box shape. A total height of the sample (measured from bottom to top) can be in the range of 3 mm to 5 mm. Preferably, the total height is 4 mm. The height of a layer can be in the range of 0 mm to the total height of the sample.

The total width and/or length of the sample (measured between the side surfaces) can be in the range of 8 mm to 20 mm. Preferably, the total width and/or length is 16 mm. The width and/or length of one layer can be in the range of 8 mm to 12 mm. Preferably, it is 10 mm. A thickness of the surrounding layer can be in the range of 2 mm to 4 mm, preferably it is 3 mm. The thickness can denote a distance between an outer side surface of the frame and an inner side surface of the frame measured along a direction being oriented orthogonal to such a side surface.

A surface of the structure can be flush with the surface of the surrounding clear material. A surface, in particular a top surface of the structure can be uncovered or covered by the surrounding clear material.

Alternatively, the sample can have a tooth-like geometry. The geometry, in particular layer shape information of a layered sample, can be provided by a predetermined shape library which was explained before or by an individually determined 3D tooth design, e.g. provided by a dental company. In other words, the sample can mimic an outer shape and, if desired, an inner structure of a (layered) human tooth structure (which can provide a target tooth structure). Such a sample can be closer to a real tooth in terms of visual appearance and can therefore lead to more precise models. Similarly to layered stack, such a tooth-like sample can be arranged in a hollow frame that is formed by clear material. This also allows to mimic illuminating from the side and to hold the sample at a fixed position and orientation. The top surface of the surrounding clear material can be made flat to facilitate large-scale measuring on an array of samples (e.g. a 10x10 array), because a measurement device can move smoothly on a flat surface.

A sample can be manufactured, in particular according to information w.r.t. to an element of a training input data set for the forward model, and its reflectance can be measured, in particular with a spectrometer and with a predetermined measurement geometry such as a circular 45°/0°-measurement geometry or a spherical measurement geometry such as d/8° SCE (specular component excluded) in order to provide an element of a training output data set. Measurements can be taken at the center of the upper surface of the sample.

Simulations and experiments have shown that such a sample accurately mimics characteristics of existing dental structures, in particular the optical characteristics of the inner layers. This, in turn, allows an accurate determination of the forward model with the aforementioned advantages.

The invention is further described with reference to the attached figures. The figures show:

Fig. 1    a schematic illustration an inner structure of a tooth,

Fig. 2    a schematic flow diagram of a method for determining printing material information according to the invention,

Fig. 3    a schematic cross section of a dental structure,

Fig. 4    an example of a star shape,

Fig. 5    an example of layers with a star shape,

Fig. 6    a cross section of a sample according to the invention, and

Fig. 7    a top view on the sample of Fig. 6.

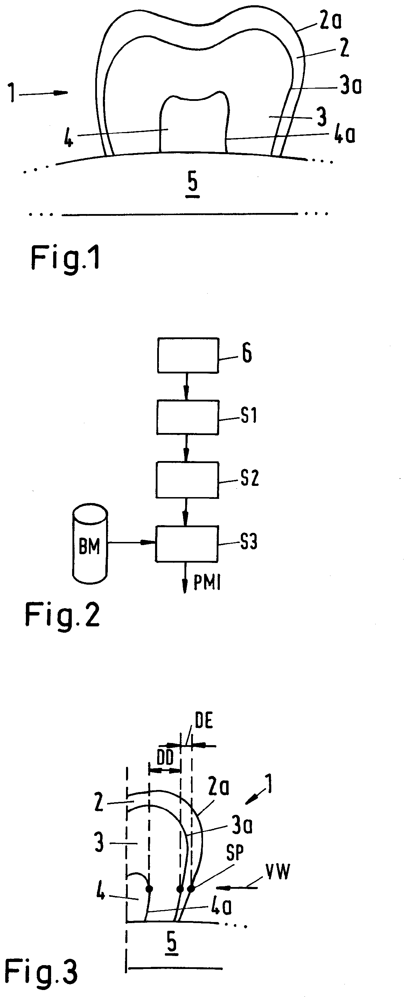

In the following, the same reference numerals denote the same or similar technical features. Fig. 1 shows a schematic illustration of an inner structure of a tooth 1 which is one example of a dental structure to be manufactured, i.e. of a target to be manufactured with printing material information. The tooth 1 comprises

- an outer layer 2 with an outer surface 2a, the outer layer being an enamel layer,
- a first inner layer 3 with an outer surface 3a, the first inner layer being a dentin layer, and
- a second (and most) inner layer 4 with an outer surface 4, the second inner layer being a root layer.

Further shown is a section of a gingiva 5 which may or may not be be part of the target.

Fig. 2 shows a schematic flow diagram of a method for determining printing material information PMI for manufacturing a layered dental structure such as the tooth 1 shown in Fig. 1. In a receiving step S1, outer shape information and outer shade information concerning the target are received. Such information can be generated by using a DentalCAD software and can be stored in a data storage unit 6, in particular along with meta data representing pose (position and/or orientation) information with respect to the dental structure. The information can be provided as 3D-model (usually encoded by a STL file) with said pose information as meta data. In case of multiple targets such as multiple teeth, all are stored in the same coordinate system, the orientation and translation information allow to place the teeth into the gingiva correctly.

Shape information can be generated by an intraoral scanning device. The DentalCAD software can use a library LIB of dental structure outer-shapes, e.g. from dental companies VITA or Ivoclar, to select teeth that look pleasant in the denture. It allows to orientate and arranges the target in the gingiva (rotation and translation operation of the teeth in library LIB) and might also change the shape of the teeth to ensure that the patient can bite pleasantly. Furthermore, for each tooth it saves shape parameters (indicating which tooth of the library was selected) and shade parameters (such as the color of the middle third of the tooth and the color on other spots).

The shade information can be CIELAB values (e.g. under CIE D65 illuminant and the CIE 1931 2° standard observer). It can also reference to a color in a shade guide, e.g. the VITA classic (e.g. shade A2) or 3D-master shade guide.

The tooth outer shape and shade information are input of a layer determination step S2 in which inner layer-specific information, in particular inner layer-specific shape information, of the inner layers 3, 4 and the outer layer 2 are determined. This step can be performed by a software component. As an example, a shape of a dentin layer 3 and a root layer 4 (and potentially more layers) are determined such that they are arranged in the tooth 1 but the outer shape of the tooth 1 is not changed.

The result is the outer shape of the tooth 1 (e.g. stored as a (triangle-) mesh) and the shapes of the inner dentin and root layers 3, 4 inside the outer shape (e.g. stored as (triangle-)meshes as well). The meshes can represent the outer surface 2a, 3a, 4a of the respective layer 2, 3, 4. The structure is similarly as of a Russian doll: The root layer 4 is fully enclosed by the dentin layer 4, which is fully enclosed by the enamel layer 2, wherein the outer surface 2a of the enamel layer 2 provides the outer tooth shape). A hierarchy can be included in the structure (as shown in Fig. 1): The innermost root layer 4 is the highest in the hierarchy, followed by the intermediate dentin layer 3 followed by the outermost enamel layer 2. In this way, it is ensured that during slicing of the tooth 1 for printing, a voxel within the tooth 1 can be assigned exactly to one layer and the different layers can be filled with different printing material combinations.

In other words, a 3D model of the layered dental structure can be generated.

The layer-specific shape information and the shade information are input of a printing material determination step S3. This step can also be performed by a software component.

In this printing material determination step S3, each layer 2, 3, 4, in particular the corresponding mesh, is annotated with (a different) printing material information PMI. As one example, a printing material information can be provided as RGBA-information or as a RGBA vector, wherein A denotes an Alpha-translucency value and RGB denotes red, green, black values. It is, however, also possible to use a different representation of the printing material information such as a CIELAB vector. As outlined before, the printing material information can be provided in a printer-independent or in a printer-dependent manner. In the first case, this information can be transformed by the color and translucency profile using in the slicing profile into material ratios which can then be used for printing. In summary, the printing material information determined in said step S3 can be provided for each layer 2, 3, 4, e.g. as a vector or data signal.

Determination of the printing material information PMI requires the shade information received in the receiving step S1. The shade information can contain colors at different spots SP of the tooth 1, in particular on the outer surface 2a of the enamel layer, more particular at the middle third of the tooth 1 (see Figure 3). For each spot, a spot-specific thickness DD, DE of enamel, denting and root layer 2, 3, 4 is computed, e.g. by averaging all the spatially-varying thickness values over a region around the spot SP (see Figure 3). This can be done conveniently using ray tracing or by computing a distance field. Figure 3 shows a schematic cross section of a dental structure, namely a tooth 1 with a spot SP on the outer surface 2a of the enamel layer 2 in the middle third of the tooth 1. Further shown is a viewing direction VW which provides a reference direction for thickness determination. The viewing direction can be parallel to a labial's surface normal with reference to the spot SP. Further shown is a thickness DE of the enamel layer 2 and a thickness of the dentin layer 3.

The overall shade information of the tooth 1 at different spots SP and the corresponding layer thickness information as well as a predefined per-layer A (Alpha-translucency) values are then used as model input to evaluate a backward model BM to obtain the printing material information PMI, in particular of the enamel and dentin layer 2, 3. The printing material information PMI for the root layer 4 can be computed by a predefined function from the dentin layer-specific printing material information or the backward model can be extended to also predict the root layer-specific printing material information for a given A value.

The backward model BM has been described before. The computed layer-specific printing material information for enamel, dentin and root layer 2, 3, 4 are attached to the shape information, e.g. using per-vertex colors, but also textures of constant RGBA values are possible. The printing material information are not necessarily printer-independent (and thus depend on the 3D-printer, material and postprocess). They are just used to intrinsically encode the material ratios using color and translucency profile (multidimensional lookup) used by the slicing software (e.g. Cuttlefish) that transforms CIELAB Alpha values to material ratios, i.e. the process is RGBA -> CIELAB Alpha -> material ratios (e.g. cyan, magenta, yellow, white, clear - but also more material can be use in this way).

The annotated layered tooth 3D model together with the gingiva 5 can be saved as an assembly whereas the orientation and translation information of the teeth is used to place the teeth as intended by the DentalCAD software into the gingiva 5. This assembly is then sliced by a slicing software (e.g. Cuttlefish) resulting in arrangements of the available printing materials (stack of PNG-files whereas each pixel contains the information of the printing material(s) that have to be placed in the print tray) to reproduce the color, translucency and natural look of the denture.

In the layer determination step S2, a parametrized shape model can be used in order to determine the layer-specific shape information of the inner layers 3, 4 and the outer layer 2 are determined. As one example, it can be assumed that geometric designs of enamel, dentin and root outer surfaces 2a, 3a, 4a are respectively given for every tooth type, i.e. predetermined. Said designs can be provided by a digital design created by a dental company that has a lot of experience in aesthetics. In particular, for the dental library LIB of outer tooth shapes used by the DentalCAD software, it is possible to create special designs of dentin and root outer shapes for each tooth shape ensuring a high aesthetic of the tooth with the corresponding inner structure.

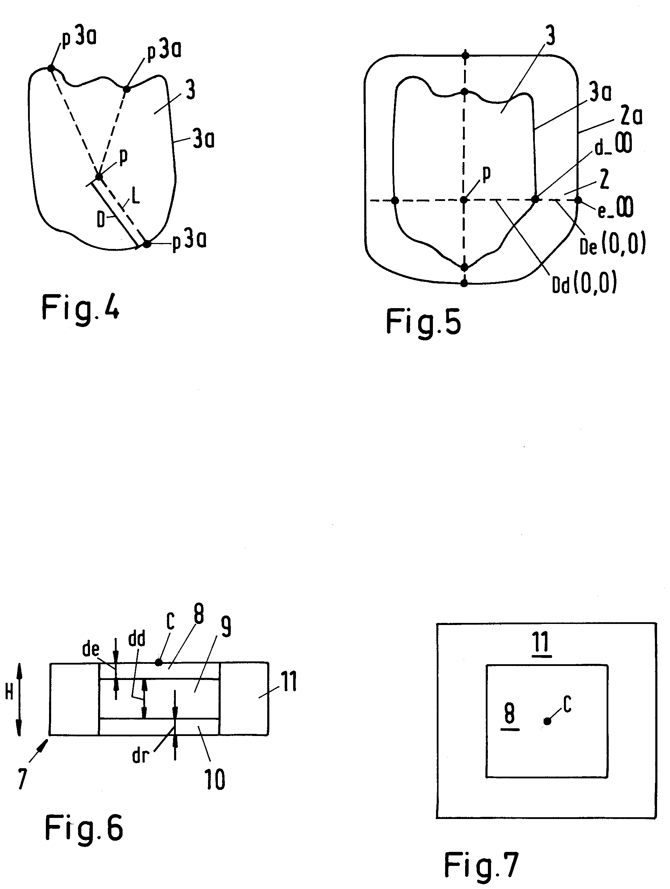

The aforementioned designs can be determined using a parametrized star shape model. A star shape is a set that includes at least one reference point p (see Fig. 4), so that all points of the volume enclosed by the respective surface can be connected with a line to this reference point p and all points of the line are also elements of the volume. Fig. 4 shows an exemplary dentin layer 3 along with its outer surface 3a, wherein said outer surface or points p3a on said outer surface 3a can be defined by spherical coordinates centered at the reference point p, i.e. by a distance D from p and two angles defining the orientation of the line L connecting p with the point. In particular, the domain of the two angles (theta,

pi)$\in[0,360°)$ x $[0,180°]$ of the spherical coordinates can be discretized, e.g. the first angle domain by N equidistant angles and the second angle domain by M equidistant angles. The shape can then be characterized by an NxM-dimensional matrix in which every entry corresponds to an angle pair and contains the distance from the point p. This matrix is called the shape descriptor. The inner structure of a tooth 1 containing enamel, dentin and root, can be described by 3 shape descriptors all defined by the same reference point p.

The shape information, in particular provided by the shape descriptors, can be used to determine thickness information and to provide the layer-specific shape information.

Figure 5 shows a cross section of very sparse shape descriptors of enamel and dentin using a 4x5-matrix each. Using N, M > 100 creates very accurate shape approximations. For a set of given (predetermined) outer shapes of the enamel, dentin and root layer optimally designed to be aesthetically pleasant, the shape descriptor matrices of dimension NxM can be computed and stored. This needs to be performed only once. As one example, a dentin shape descriptor is provided by the matrix

| Dd(0,0) | Dd(0,45) | Dd(0,90) | Dd(0,135) | Dd(0,180) |
|---|---|---|---|---|
| Dd(90,0) | Dd(90,45) | Dd(90,90) | Dd(90,135) | Dd(90,180) |
| Dd(180,0) | Dd(180,45) | Dd(180,90) | Dd(180,135) | Dd(180,180) |
| Dd(270,0) | Dd(270,45) | Dd(270,90) | Dd(270,135) | Dd(270,180) |

wherein entry Dd(0,0) defines a point d_00 on the dentin outer surface 3a by encoding the distance between this point d_00 and the reference point p along a line with the orientation provided by the angles 0°, 0°.

An enamel shape descriptor can be provided by the matrix

| De(0,0) | De(0,45) | De(0,90) | De(0,135) | De(0,180) |
|---|---|---|---|---|
| De(90,0) | De(90,45) | De(90,90) | De(90,135) | De(90,180) |
| De(180,0) | De(180,45) | De(180,90) | De(180,135) | De(180,180) |
| De(270,0) | De(270,45) | De(270,90) | De(270,135) | De(270,180) |

wherein entry De(0,0) defines a point e_00 on the enamel outer surface 2a by encoding the distance between this point e_00 and the reference point p along a line with the orientation provided by the angles 0°, 0°. For the sake of simplicity, only two such distances are shown in Fig. 5.

In order to determine the shape of the enamel, dentin and root layer 2, 3, 4 for a given tooth outer shape, a corresponding shape descriptor of the outer tooth shape $d_t(\varphi,\theta)$ can be determined and alter the dentin descriptor by

$$d_d'(\varphi, \theta) = d_t(\varphi,\theta) - F[(d_e(\varphi,\theta)-d_d(\varphi, \theta))] \qquad \text{formula 1,}$$

wherein $d_t$ stems from a shape descriptor of the outer surface determined based on the outer shape information received in the receiving step S1 and $d_e$ and $d_d$ stem from shape descriptors for outer surfaces of given enamel and dentin layers, and $\varphi,\theta$ denotes the angle values w.r.t. the aforementioned spherical coordinate system. $d_e$ can also be equal to $d_t$. An altered root descriptor can be determined as

$$d_r'(\varphi, \theta) = d_t(\varphi,\theta) - F[(d_e(\varphi,\theta)-d_r(\varphi, \theta))] \qquad \text{formula 2,}$$

wherein d, stems from a shape descriptor for an outer surface of a given root layer. F denotes a morphing function, e.g. F(x) = c*x, with c being a scaling parameter. The scaling parameter can be a user-selected parameter or it can be algorithmically determined, e.g. based on CT images of a reference dental structure. If c is constant, the enamel and dentin layer thickness is scaled isotropically. The upper formulas ensure that the enamel and dentin layer thicknesses of the aesthetic design are preserved even for a different tooth shape.

Alternatively, it is also possible to use $d_t(\varphi,\theta)$ instead of $d_e(\varphi,\theta)$ to alter the dentin descriptor as

$$d_d'(\varphi,\theta) = d_t(\varphi,\theta) - F[(d_t(\varphi,\theta)-d_d(\varphi,\theta))] \qquad \text{formula 3,}$$

and $d_d'(\varphi,\theta)$ instead of $d_e(\varphi,\theta)$ to alter the root descriptor

$$d_r'(\varphi,\theta) = d_d'(\varphi,\theta) - F[(d_d'(\varphi,\theta)-d_r(\varphi,\theta))] \qquad \text{formula 4.}$$

It is also possible to perform an anisotropic morphing by using more parameters to modify the layers differently in the buccal, proximal, or occlusal direction. This can be done by replacing the function F with a function G:

$$G(y,z) = sqrt((y-z)A(y-z)) \qquad \text{formula 5,}$$

where $y = C(\varphi,\theta,d_e(\varphi,\theta))$, $z = C(\varphi,\theta,d_r(\varphi,\theta))$, C(x) is the transformation from spherical coordinates to cartesian coordinates (with axes in buccal, proximal, and occlusal directions), and A is a 3x3-diagonal matrix with scale values as diagonal elements.

It is also possible to ensure a minimal enamel layer thickness m, by setting

$$d_d'(\varphi, \theta) = d_t(\varphi,\theta) - m, \text{ for } F[(d_e(\varphi,\theta)-d_d(\varphi, \theta))] < m \text{ or } G(x,y) < m \qquad \text{formula 7.}$$

or replacing $d_e(\varphi,\theta)$ by $d_t(\varphi,\theta)$ with

$$d_d'(\varphi, \theta) = d_t(\varphi,\theta) - m, \text{ for } F[(d_t(\varphi,\theta)-d_d(\varphi, \theta))] < m \text{ or } G(x,y) < m \qquad \text{formula 8.}$$

A similar approach (with F or G) can be used for ensuring a minimal dentin layer thickness.

The parameters of F or G can be optimized to reproduce the appearance (in particular the translucency) of a given tooth, e.g. the adjacent tooth.

The resulting altered descriptors $d_t(\varphi,\theta)$, $d_d'(\varphi, \theta)$ and $d_r'(\varphi, \theta)$ can be used to compute (triangle-)meshes for the tooth outer shape, the dentin outer shape and the root outer shape, respectively, i.e. the shapes of the outer surfaces 2a, 3a, 4a. Instead of using $d_t(\varphi,\theta)$ also the mesh of the original tooth outer shape can be used.

As mentioned before, a backward model BM can be used in the printing material determination step S3 in order to predict the printing material information PMI, in particular the layer specific printing material information. The backward model can e.g. take as input the overall CIELAB colors at different spots, layer-specific translucency Alpha (A) values and thicknesses, and outputs a combination of layer-specific RGB values. RGB values predicted by the backward model BM for enamel and dentin can be combined with the given Alpha (A) values to obtain RGBA-values for enamel and different RGBA-values for dentin. RGBA can be directly linked to printing material ratio using the color and translucency profile (lookup table) as used by the slicing software.

The aforementioned RGB color space (used both in the forward and the backward model) can also be replaced with another color space or a non-color space, depending on the input space of the aforementioned color and translucency profile.

The aforementioned lookup-table-based color and translucency profile can also be replaced with a mapping function that is not lookup-table-based, e.g. it can be a machine learning model.

When such an aforementioned color and translucency profile is not available or not used, it's also possible that the backward model outputs material arrangement directly (typically per-layer material ratios), instead of per-layer colors that are afterwards converted to per-layer material ratios via the aforementioned color and translucency profile. In this case, per-layer colors in the inputs of the forward model can be replaced with material arrangement (typically per-layer material ratios).

The backward model BM doesn't necessarily output layer translucencies and thicknesses, because they are supposed to be customized and provided by the end user allowing design freedom for the user's specific application.

The backward model BM aims to provide a correct combination of layer RGB that leads to overall color accuracy on multiple spots instead of only one spot.

Specifically, with two spots, the backward model BM is a prediction function: the inputs are the overall color (in a color space e.g. CIELAB, of 3 dimensions) on spot 1, layer thickness combination (3 layers: enamel, dentin, and root, i.e. a vector of 3 dimensions) on spot 1, the overall color on spot 2, layer thickness combination on spot 2, and layer translucencies (3 layers: enamel, dentin, and root. I.e. a vector of 3 dimensions). To improve simplicity, it is possible to set root translucency to be the same as dentin's due to that the root layer is mostly covered by the dentin layer. The outputs are layer RGB (2 layers: enamel and dentin). To improve simplicity, the root color can be determined by a separate simpler model modeling dentin-to-root color relationship.

The backward model BM can be based on a forward model that in particular predicts spectral reflectance of flat layered slabs mimicking the dental inner structure composed of enamel, dentin and root layers of variable thicknesses (see Fig. 6 and Fig. 7). The forward model can be a dense multilayer neural network, which takes as an input vector the enamel RGBA, the dentin RGBA, the enamel layer thickness and the dentin layer thickness, which is in total 10 parameters corresponding to the parameters of the layered targets (it can use also more parameters if the root RGBA does not depend on the dentin RGBA). The root RGBA values are not necessarily provided as input, because they can be directly calculated from the dentin values using a simpler model (however, it is also possible to include the root similarly as enamel and dentin into a model). The root thickness is also not necessarily needed, since the total thickness of the three layers of the targets (layered slab) is constant. The output of the forward model is spectral reflectance values at K wavelengths measured on the layered slabs. The number of K and e.g. be 31 and wavelengths are preferably considered in the visible wavelength range of [400$nm$, 700$nm$]. The forward model input can include also root layer's RGBA. However, the root RGBA can also be derived from the dentin RGBA by a model.

Fig. 6 shows a cross section of a sample 7 according to the invention, and Fig. 7 shows a top view on said sample 7 which is in particular used to generate training data for the forward model. The sample comprises a stack with a first layer 8 being provided by a first printing material combination which mimics an enamel layer, a second layer 9 being provided by a second printing material combination which mimics a dentin layer, and a third layer 10 being provided by a third printing material combination which mimics a root layer. Further shown is a surrounding layer 11 being provided by a clear printing material.

The sample 7 can also be denoted as a flat slab which is designed with a constant height noted as $H$ (e.g. $H$=4 mm). Such a slab can be arranged in targets comprising a plurality of different slabs, wherein each slab can then be automatically measured using a commercial spectrophotometer with an xy-table, which allows measuring the color of approximately thousand sample slabs per hour. The layered slab design is supposed to mimic dental inner structures when viewed from the labial direction. It consists of the first layer 8 of thickness $d_e$ (e.g. $d_e \in [0, 0.7]$ mm) with a material mixture of $m_e \in Q$ at the top, the second layer 9 of thickness $d_d$ (e.g. $d_d \in [0, H - d_e]$ mm) with a material mixture of $m_d \in Q$ beneath the first layer 8, and the third layer 10 with a thickness of $d_r = H$ -$d_d$ -$d_e$ mm and a material mixture of $m_r \in \Omega$ at the bottom. In this context, $\Omega$ denotes the set of printing material information.

The lateral dimension of the slab is e.g. 10mm $\times$ 10mm, which correspond to the approximate magnitude of the projected tooth area from the labial direction. To mimic the illuminating conditions of teeth, a margin of e.g. 3 mm clear material is added around the slab to ensure that light can enter also from the side into the slab. A spectrophotometer with a circular 45°/0°-measurement geometry, a detection aperture of 2 mm and a large illumination aperture of 16mm can be used to measure a reflectance. The latter being larger (e.g. 16mm) than the slab size is of advantage to ensure that light is illuminating the slab from not only the front but also from the side through the clear material. Assuming that light from the lingual direction can be neglected, a black backing for the measurements can be used. All measurements are taken at the center C of the slab along a direction being perpendicular to the upper surface of the first layer 8.

**Claims**

1. Method for determining printing material information (PMI) for manufacturing a layered dental structure having an outer layer (2) and at least one inner layer (3, 4), comprising the steps of:

   a. receiving outer shape information and outer shade information concerning the dental structure,
   b. determining inner layer-specific information of the at least one inner layer,
   c. determining the printing material information (PMI) as a function of the outer shape information, the inner layer-specific information and the outer shade information.

2. The method according to claim 1, **characterized in that** the printing material information (PMI) is a layer-specific printing material information.

3. The method according to one of the preceding claims, **characterized in that** a layer thickness is determined as a function of the outer shape information and the inner layer-specific information, wherein the printing material information (PMI) is determined as a function of at least the layer thickness and the outer shade information.

4. The method according to one of the preceding claims, **characterized in that** outer shade information are spot-specific shade information of at least two spots (SP) on an outer surface (2a) of the dental structure.

5. The method according to one of the preceding claims, **characterized in that** the inner layer-specific information is determined based on a parametrized shape model.

6. The method according to claim 5, **characterized in that** the inner layer-specific shape information is determined as a function of outer layer-specific shape information and a functional value of a morphing function.

7. The method according to one of the preceding claims, **characterized in that** the printing material information (PMI) are determined using a backward model (BM) which describes the relationship between a model input and a model output, wherein the model input is provided by or depends on the outer shape information, the inner layer-specific information and the outer shade information, wherein the model output is provided by the printing material information (PMI).

8.  The method according to one of the preceding claims, **characterized in that** the backward model (BM) is determined based on a forward model which describes the relationship between a model input and a model output, wherein the forward model input is provided by or depends on at least the printing material information (PMI), wherein the forward model output is provided by an outer spectral reflectance information.

9.  The method according to one of the claims 7 to 8, **characterized in that** the backward model (BM) and/or the forward model are machine learning models.

10. The method according to claim 9, **characterized in that** the backward model (BM) is trained using a cost function with a color loss term and/or with a trust region loss term.

11. The method according to one of the claims 7 to 10, **characterized in that** the forward model is determined based on at least one training data set, wherein a first forward model instance is determined based on a first training data set which comprises a training input data set and training output data set and is provided by

    a. specifying a plurality of elements of the training input data set, each element representing at least a layer thickness information and a layer-specific printing material information,
    b. manufacturing a sample according to each element of the training input data set,
    c. measuring a spectral reflectance of each sample, wherein the measured spectral reflectances provide the training output data set.

12. The method according to claim 11, **characterized in that** at least one further training data set for determining a further instance of the forward model is generated by

    a. using a previous forward model instance determined based on a previous training data set to determine a spectral reflectance for each element of a set of further elements representing at least a layer thickness information and a layer-specific printing material information, wherein an element and the element-specific reflectance are only considered as elements of the further training data set if a reflectance-specific criterion is fulfilled, and/or
    b. specifying a plurality of model input elements for the backward model (BM), wherein each element represents at least an outer shade information and a layer thickness information,
    c. predicting corresponding model output elements with the backward model (BM),
    d. using the layer-specific printing material information of the predicted model output elements and the layer-specific thickness information to manufacture a sample,
    e. measuring a spectral reflectance of each sample,
    f. specifying the layer-specific printing material information of the predicted model output elements and the layer-specific thickness information as elements of the training input data set of the further training data set and the measured reflectances as elements of the training output data set of the further training data set,

    wherein the further instance of the forward model is determined based on the further training data set.

13. The method according to one of the claims 11 to 12, **characterized in that** the backward model (BM) is determined based on at least one training data set comprising a training input data set and a training output data set, wherein at least one element of the training output data set is provided by printing material information (PMI), wherein a corresponding element of the training input data set is provided by the model output of the forward model if the printing material information (PMI) provide a model input for the forward model.

14. A system for determining printing material information (PMI) for manufacturing a layered dental structure having an outer layer and at least one inner layer, the system comprising at least one interface for receiving outer shape information and outer shade information concerning the dental structure and at least one evaluation unit, **characterized in that** the system is configured to perform a method according to one of the claims 1 to 13.

15. A sample for generating training data used to determine a forward model according to claim 8 or any claim referring to claim 8, wherein the sample (7) comprises a structure with at least two layers (8, 9, 10) of printing material and at least one layer (11) of clear printing material surrounding the structure at least partially.

Fig.1

Fig.2

Fig.3

Fig.4

Fig.5

Fig.6

Fig.7

Europäisches
Patentamt
European
Patent Office
Office européen
des brevets

# EUROPEAN SEARCH REPORT

**Application Number**

EP 25 15 2881

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/081272 A1 (JOHNSON RYAN E [US] ET AL) 4 April 2013 (2013-04-04) * paragraph [0012] - paragraph [0025] * * paragraph [0061] - paragraph [0091]; claims 1-15; figure 1 * | 1-3,14, 15 | INV. A61C5/77 A61C13/00 B33Y50/00 B29C64/10 B29C64/194 |
| X | US 7 240 839 B2 (JJL TECHNOLOGIES LLC [US]) 10 July 2007 (2007-07-10) | 1,8 | B33Y80/00 B22F10/80 |
| Y | * paragraph [0352] - paragraph [0363] * | 4-11,13 | B22F10/85 |
| A | * paragraph [0422] - paragraph [0428] * * paragraph [0580] - paragraph [0583] * | 12 | |
| Y | JP 7 122927 B2 (KURARAY NORITAKE DENTAL INC) 22 August 2022 (2022-08-22) | 4-11,13 | |
| A | * the whole document * | 12 | |

**TECHNICAL FIELDS SEARCHED (IPC)**

A61C
B33Y
B29B
B29C
B22F
C04B

The present search report has been drawn up for all claims

| Place of search | Date of completion of the search | Examiner |
|---|---|---|
| The Hague | 29 July 2025 | Lang, Xavier |

EPO FORM 1503 03.82 (P04C01)

## ANNEX TO THE EUROPEAN SEARCH REPORT
## ON EUROPEAN PATENT APPLICATION NO.

EP 25 15 2881

This annex lists the patent family members relating to the patent documents cited in the above-mentioned European search report.
The members are as contained in the European Patent Office EDP file on
The European Patent Office is in no way liable for these particulars which are merely given for the purpose of information.

29-07-2025

| Patent document cited in search report | | Publication date | Patent family member(s) | | Publication date |
|---|---|---|---|---|---|
| US 2013081272 | A1 | 04-04-2013 | EP | 2582319 A1 | 24-04-2013 |
| | | | US | 2013081272 A1 | 04-04-2013 |
| | | | WO | 2011159503 A1 | 22-12-2011 |
| US 7240839 | B2 | 10-07-2007 | US | 6373573 B1 | 16-04-2002 |
| | | | US | 2002097400 A1 | 25-07-2002 |
| | | | US | 2006023218 A1 | 02-02-2006 |
| | | | US | 2008094631 A1 | 24-04-2008 |
| | | | US | 2010043706 A1 | 25-02-2010 |
| JP 7122927 | B2 | 22-08-2022 | JP | 7122927 B2 | 22-08-2022 |
| | | | JP | 2020058648 A | 16-04-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **URBAN, P.** ; **TANKSALE, T. M.** ; **BRUNTON, A.** ; **VU, B. M.** ; **NAKAUCHI, S.** Redefining a in rgba: Towards a standard for graphical 3d printing. *ACM Transactions on Graphics (TOG)*, 2019, vol. 38 (3), 1-14

- **A. BRUNTON** ; **C. A. ARIKAN** ; **T. M. TANKSALE** ; **P. URBAN**. 3d printing spatially varying color and translucency. *ACM Transactions on Graph. (TOG)*, 2018, vol. 37 (157), 1-157